# EUROPEAN PATENT APPLICATION

(11) **EP 4 835 741 A1**
(43) Date of publication of application: **04.11.2026**
(21) Application number: 25173785.4
(22) Date of filing: 30.04.2025
(51) Int. Cl.: G06N 3/082, G06N 3/0495, G06N 5/01

(54) **METHOD AND SYSTEM FOR CALCULATING A COMPRESSION POLICY**

(71) Applicant: NXP B.V., 5656 AG Eindhoven (NL)
(72) Inventor: van de Waterlaat, Nick Petrus Martinus, 5656AG Eindhoven (NL); Rayo Torres Rodriguez, Hiram, 5656AG Eindhoven (NL); Vogel, Sebastian Alexander Amadeus, 5656AG Eindhoven (NL)
(74) Representative: Colaiuda, Antonella

(57) **Abstract**

The present disclosure relates to a computing system and a method for calculating and using a compression policy of a neural network, comprising the steps of: selecting a plurality of compression methods, a plurality of compression ratios associated with the plurality of compression methods, and a target global compression ratio for the neural network; compressing each of the plurality of layers of the neural network according to each combination of the plurality of compression methods and of the plurality of compression ratios; for each of the plurality of layers, calculating a value for a loss function and a value for a cost function; calculating the compression policy for the target global compression ratio using the value for the loss function and the value for the cost function for each of the plurality of layers, and compressing the neural network according to the compression policy.

## Description

### TECHNICAL FIELD

The present disclosure related to a method and a system for calculating and using a compression policy of a neural network.

### BACKGROUND

Neural networks are a class of machine-learned models that can be used for computing a great variety of tasks in different fields like for example healthcare, automotive and internet of things. Neural networks usually have an architecture including an input layer, an output layer and one or more intermediate layers. Complex neural networks may have up to thousand intermediate layers. Deploying such complex neural networks on edge devices presents significant challenges due to limited resources and power constraints.

### SUMMARY

Aspects of the disclosure are defined in the accompanying claims.

In a first aspect of the present disclosure, there is provided a method for using a compression policy of a neural network. The method comprises the steps of: selecting the neural network, wherein the neural network comprises a plurality of layers, selecting a plurality of compression methods, a plurality of compression ratios, and a target global compression ratio for the neural network, calculating, for each of the plurality of layers of the neural network, a value of a loss function and a value of a cost function for each combination of each of the plurality of compression methods and each of the plurality of the compression ratios, calculating the compression policy for the target global compression ratio using the value for the loss function and the value for the cost function for each combination of each of the plurality of compression methods and each of the plurality of the compression ratios, and compressing the neural network according to the compression policy.

In one embodiment of the first aspect of the present disclosure, the method further comprises the step of inferring, for each of the plurality of layers of the neural network, the combinations minimizing the loss function and the cost function and using said combinations for calculating the compression policy.

**In** one embodiment of the first aspect of the present disclosure, the plurality of compression methods, the plurality of compression ratios, and the target compression ratio for the neural network are stored in a database.

**In** one embodiment of the first aspect of the present disclosure, the value of the loss function and the value of the cost function are stored in a database.

**In** one embodiment of the first aspect of the present disclosure, the method further comprises the step of calculating the compression policy for the target global compression ratio using the inferred combinations is executed using a solver for a constrained optimization problem.

In one embodiment of the first aspect of the present disclosure, the method further comprises the step of storing the compression policy in a database.

In one embodiment of the first aspect of the present disclosure, the compression method is a quantization method, a pruning method, a weight sharing method, a tensor decomposition method or a low-rank matrix factorization method.

In one embodiment of the first aspect of the present disclosure, a further fine-tuning step is applied on each compressed layer of the plurality of layers of the neural network or on the whole compressed neural network.

In a second aspect of the present disclosure, there is provided a computing system. The computing system comprises one or more processors; and one or more non-transitory computer-readable media that stores instructions that, when executed by the one or more processors, cause the computing system to select a neural network, wherein the neural network comprises a plurality of layers, select a plurality of compression methods, a plurality of compression ratios, and a target global compression ratio for the neural network, calculate, for each of the plurality of layers of the neural network, a loss function and a cost function for each combination of each of the plurality of compression methods and each of the plurality of the compression ratios, calculate a compression policy for the target global compression ratio using the loss function and the cost function for each combination of each of the plurality of compression methods and each of the plurality of the compression ratios, and compress the neural network according to the compression policy.

In one embodiment of the second aspect of the present disclosure, the step of selecting the neural network, and/or the plurality of compression methods, a plurality of compression ratios, and/or the target global compression ratio for the neural network is performed via a user interface.

In one embodiment of the second aspect of the present disclosure, the computing system further comprises a database.

In one embodiment of the second aspect of the present disclosure, the database is configured to store: the neural network, and/or the plurality of compression methods, and/or a plurality of compression ratios, and/or the target global compression ratio for the neural network and/or the loss function for each layer of the neural network and/or the cost function for each layer of the neural network.

In one embodiment of the second aspect of the present disclosure, the database is configured to store the compression policy.

In one embodiment of the second aspect of the present disclosure, the database is stored in the one or more non-transitory computer-readable media.

In one embodiment of the second aspect of the present disclosure, the database is stored on an external server.

### DESCRIPTION OF DRAWINGS

Embodiments of the present disclosure will be described in more detail with reference to the appended drawings, in which:
Figure 1 shows a block diagram describing a method according to a first embodiment of the present disclosure.
Figure 2 shows a compression method according to a first embodiment of the present disclosure.
Figure 3 shows a database according to a first embodiment of the present disclosure.
Figure 4 shows a computational step according to a first embodiment of the present disclosure.
Figure 5 shows a system according to a second embodiment of the present disclosure.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DESCRIPTION OF EMBODIMENTS

Compression techniques may offer a solution to deploying complex neural network on edge devices. Compression techniques may help reducing memory footprint and inference latency by using methods like quantization, pruning, and low-rank matrix decomposition. Although those methods enable the deployment of machine learning models on resource-constrained edge devices, determining the best combination of compression methods and compression ratios for every layer is still a challenge. In particular, it may be difficult to find a balance between the maximization of the compression of the overall neural network and the overall performance of the model. In addition, it should be noted that optimal compression may be different from layer to layer: some layers can be significantly compressed without performance degradation, while others cannot. A common approach for finding the optimal compression for each layer of a neural network involves users specifying the compression method(s) and ratio(s) for each layer of the network, guided by their experience or intuition. This method is not time efficient, as the user often invests a significant amount of time and effort in experimenting with various combinations of compression methods and ratios for each layer. Additionally, this method tends to bring suboptimal outcomes, as users typically cannot exhaustively explore all combinations.
Failure to find optimal compression methods and ratios on a per-layer basis can lead to degraded performances, increased memory usage, and longer inference times, hampering the neural network's effectiveness on edge devices.

The present disclosure describes a fully automatic method and a system for compressing a neural network according to a compression policy. A compression policy may be defined as a policy describing for each layer of a given neural network which compression method and compression ratio should be used to achieve a chosen global target compression ratio. The global target compression ratio is defined as the compression ratio that the whole neural network should reach. It should be noted that the global target compression ratio is not a layer-wise value but a global value which is valid for the whole neural network. In addition, several global compression ratios may be defined. In this embodiment the method of the present disclosure is performed N times with N being the number of target global compression ratios that have been specified by the user.

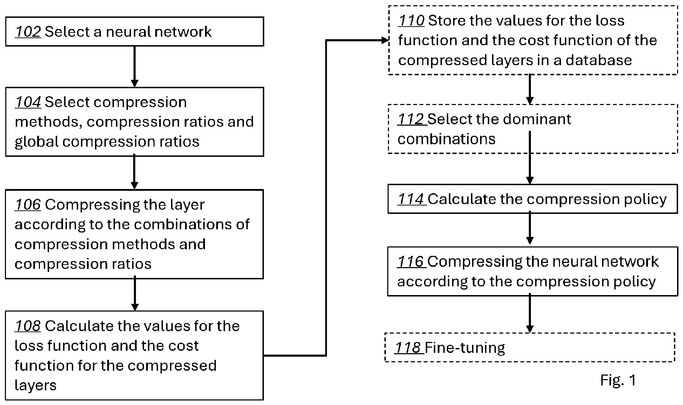

Fig. 1 shows a method according to a first embodiment of the present disclosure. In a first step 102, a neural network is selected. The neural network may be any type of neural network as the method of the present disclosure is not sensitive to the neural network used. As example the neural network could be a one-shot neural network, a recursive neural network, a convolutional neural network, or a feed-forward neural network. The neural network may be a pre-trained neural network. In a second step 104 a plurality of compression methods, a plurality of compression ratios for those compression methods and a global target compression ratio are selected. The neural network, the plurality of compression methods, the plurality of compression ratios associated with those compression methods and the global target compression ratio may be chosen by a user via a user interface, for example by selecting them form a table or a list. The compression method may be a quantization method, a pruning method, a weight sharing method, a tensor decomposition method or a low-rank matrix factorization method. The related compression ratio may be a weight compression between 2 and 8 bits for the quantization method, sparsity ratios between 10%, 20%, ..., 90% for pruning method. For the low-rank matrix factorization method the weights of each layer of the neural network may be decomposed in two matrices, respectively of size M and N. The compression ratio for this method then ranges between 2 and the smallest value of M or N. It should be noted that several compression methods with the related compression ratios may be selected. The compression ratios may be chosen as a broad range or as narrow range of values. This choice of compression ratios and compression methods may be further dependent on the use-case to which the neural network is applied.

In step 106, the method calculates a compression of each layer of the neural network according to all possible combinations of compression methods and related compression ratios. In an exemplary embodiment a user may have specified to use quantization as compression method with a compression ratio between 2 bits and 6 bits. The method of the present application would then create a compressed layer for each specified compression ratio. In other words, the following compressed layers of the original layer *i* are computed: *i* compressed layers that have been quantized to 2 bits, *i* compressed layers that have been quantized to 3 bits, *i* compressed layers that have been quantized to 4 bits, *i* compressed layers that have been quantized to 5 bits and *i* compressed layers that have been quantized to 6 bits. In another embodiment, a layer may be compressed by a combination of a first method with a related compression ratio and a second method with a related compression ratio. For example, a layer may be compressed with a combination of a quantization method with weight compression 2 and a pruning method with sparsity ratio 10%.

In step 108, the method calculates the values for the loss function ${L}_{i}^{mk}$ and the values for the cost function ${C}_{i}^{mk}$ of each combination of compression method *m* and compression ratio *k* for each compressed layer *i* in the neural network. The value for the loss function ${L}_{i}^{mk}$ may be calculated by using a Knowledge Distillation (KD) loss. The KD loss is calculated with respect to the original uncompressed layers and quantifies the degradation of applying to the original uncompressed layers the compression method with its corresponding compression ratio. In other words, the KD loss quantifies the difference between each original uncompressed layer and each corresponding compressed layer. Examples of the KD loss are the Mean Squared Error (MSE) and Noise-to-Signal Ratio (NSR). The cost function ${C}_{i}^{mk}$ may quantify, for instance, the memory footprint of the compressed layer or the inference latency. The memory footprint may be defined as the amount of memory needed to run the neural network. In case where the neural network runs on embedded devices with constrained memory, the memory footprint should be kept small because such embedded devices usually do not possess a large memory. Inference latency may be defined as the time delay between the time when a neural network receives an input and the time when the same neural network generates the corresponding output. In other words, the inference latency measures the delay for a neural network model to process inputs and execute its inference logic to produce predictions or decisions. Especially in the cases where a neural network is used in security applications or in time constrained applications, the inference latency should be kept small.

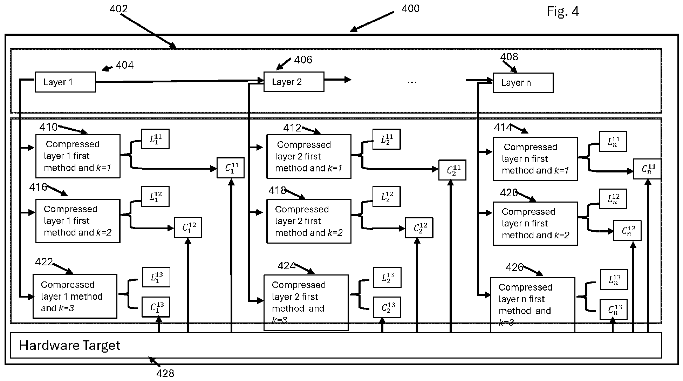

The method of the present disclosure calculates for each layer *i* the value for the function loss ${L}_{i}^{mk}$ between the original layer *i* and each compressed variant of layer *i.* In addition, the value for the cost function ${C}_{i}^{mk}$ for each compressed layer is computed through feedback from a hardware target. This last step may be performed in parallel with the calculation of the loss function. This procedure is repeated for all layers and will be explained in detail in Fig. 4.

In an optional step 110, the method of the present disclosure may store the layer-wise calculated values for the loss functions ${L}_{i}^{mk}$ and cost functions ${C}_{i}^{mk}$ in a database also referred to as meta-info database. The database may optionally store information about the neural network used and the specific use-case for which the compression was requested. This may have the effect of re-using historic data to expedite future applications, for example when offering the method to different customers using similar neural networks. The meta-info database may be stored either locally or in an external server. Storing the database in an external server may have the effect of making it easily available to an external customer.

In an optional step 112 the method of the present disclosure may derive, for each layer *i,* the combinations of compression method and compression ratio that minimize the value of the loss function and the value of the cost function. This means that there is no alternative combination of compression method and compression ratio for that layer that can improve one aspect (e.g., network efficiency) without sacrificing another aspect (e.g., task performance). In other words, the current combination of compression method and compression ratio represents the best achievable trade-off between network efficiency and task performance for that particular layer. These combinations may be referred to as dominant combinations. This step may be regarded to as a pre-processing step before building a compressed neural network, which filters out options that are suboptimal. This pre-processing step may have the effect of significantly reducing the computational time for the next step, i.e. the calculation of the compression policy.

In step 114, the method of the present disclosure calculates the compression policy by choosing the optimal layer-wise combinations of compression methods and compression ratios, which fulfil the chosen global target compression ratio. In other words, for each layer *i* a combination of compression methods and compression ratios is chosen, so that the global target compression ratio is reached. This may be achieved by formulating the problem as a constrained optimization problem. An example of constrained optimization model is a Multiple-Choice Knapsack problem. To solve the constrained optimization problem an optimal layer-wise combination that minimizes the overall sum of loss functions and cost functions is chosen. In other words, for each layer a compression method and a related compression ratio are chosen so that the overall summed loss function and cost function is minimized. The chosen compression method and compression ratio for each layer represent the compression policy. Different layers may have different compression methods and different compression ratio. In step 116, the neural network is compressed according to the compression policy. In an optional step 118, a fine-tuning of the neural network may be performed. The fine-tuning of the neural network has the effect of recovering from possible losses due to degradation effect. In one embodiment the whole compressed neural network may be fine-tuned. In another embodiment each compressed layer can be separately fine-tuned. Fine-tuning the compressed layers on an individual basis may have the effect of reducing the overall computational time compared to alternative solutions that require fine-tuning the entire neural network.

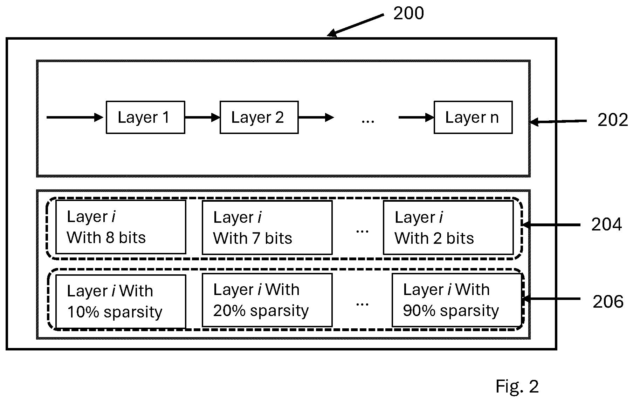

Fig. 2 shows in details the selection of the neural network, of the compression methods and of the compression ratios according to one embodiment of the present disclosure. A neural network 202 is chosen by a user. The neural network may be chosen by a user from a pool of possible neural networks. It should be noted that the present method is not sensitive to the neural network used and is able to adapt to any type of selected neural networks. The user selects as next step which types of compression methods and related compressions ratio he wants to use for the compression. In the example of Fig. 2 two methods are selected: quantization and pruning. For both those methods a range of *k* compression ratios is chosen. Note that the range of the compression ratio may be different for each method: for example, the quantization method may have a compression ratio with *k=3* (i.e. 3 compression ratio options for each layer should be calculated) while the pruning method may have a compression ratio with *k=4* (i.e. 4 compression ratio options for each layer should be calculated). In one embodiment, the user may select the compression method and the related compression ratios from a pre-compiled table or a list including different compression methods and different related compression ratios. The table or list may be stored in a database. The database may be stored locally or on an external server. As a result of the user's choice, the layers of the neural network are compressed according to all possible combinations of compression methods and related compression ratios (204, 206).

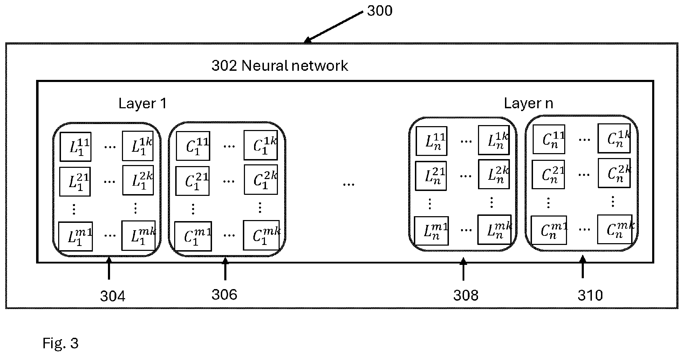

Fig. 3 shows a database 300 according to step 110 of an embodiment of the present disclosure. The database stores for each layer of the selected neural network 302 the calculated values for the loss function ${L}_{i}^{mk}$ (304, 308) and the calculated values for the cost function ${C}_{i}^{mk}$ (306, 310) for each combination of compression method *m* and compression ratio *k.* The database may store different neural networks with respective calculated values for the loss function ${L}_{i}^{mk}$ and cost function ${C}_{i}^{mk}$ for each layer-wise combination of compression method and compression ratio. Storing the values for ${C}_{i}^{mk}$ and ${L}_{i}^{mk}$ may have the effect of reducing computational time, because it is possible to re-use the values for ${C}_{i}^{mk}$ and ${L}_{i}^{mk}$ for a chosen neural network. For example, if a customer requires a neural network for which in the past the values of ${C}_{i}^{mk}$ and ${L}_{i}^{mk}$ have been calculated and stored in the database, then it may be possible to re-use such values. Optionally the database may store information about the use-case for which the neural network was used. The information regarding the selected neural network, the calculated values for the loss function and cost function and the use-case may be stored in the database in form of a list or table. The database may be stored locally or in an external server/external cloud.

Fig. 4 shows in details an example of the calculation of the values for the loss function ${L}_{i}^{mk}$ and for the cost function ${C}_{i}^{mk}$ for a neural network 402. In the example, one compression method is chosen, i.e. *m=1.* In the example the compression method is quantization. The chosen compression ratio has a range *k=3.* In total then 3 combinations of compression method and compression ratio should be calculated for each layer of the neural network 402. The neural network 402 has n layers represented by the blocks 404, 406 and 408. Each layer is then compressed three time: a first time for *m=1* and *k=1* (blocks 410, 412, 414), a second time for *m=1* and *k=2* (blocks 416, 418, 420) and a third time for *m=1* and *k=3* (blocks 422, 424, 426).

Preferably in parallel to such calculation, the cost function ${C}_{i}^{mk}$ is computed as well. As described above, the cost function may quantify, for instance, the memory footprint of the compressed layer or the inference latency: such quantities are computed for each layer through feedback from a hardware target (428). The hardware target may be any type of CPU, processor or computational unit on which the chosen neural network may run. It should be noticed that the hardware target may be the same hardware on which the compressed neural network would run or may be a hardware with similar characteristics to the one on which the compressed neural network would run. For the cost function too all combination between compression method and related compression ratio will be computed: in this way each loss function ${L}_{i}^{mk}$ has a corresponding cost function ${C}_{i}^{mk}$*.* After computing (and optionally saving in a database) all the values of the cost function and loss function for each layer of the neural network, the method of the present disclosure will choose for each layer one compression method with a related value of compression ratio in such a way that the global target compression ratio is reached. It should be noted that for each layer of the neural network a different compression method and/or a different compression ratio may be chosen. For example, for the layer *i=1* the compression method *m=1* with the related second compression ratio may be chosen while for the layer *i=2* the compression method *m=1* with the related first compression ratio may be chosen. The combination of all the chosen compression ratio and compression method for each layer forms the compression policy for the given neural network. The neural network is then compressed according to the compression policy. Optionally the compression policy may be stored in the database together with the neural network and the use-case for which it was calculated. This may have the effect of allowing to easily retrieve such information, without the need of calculating the compression policy again.

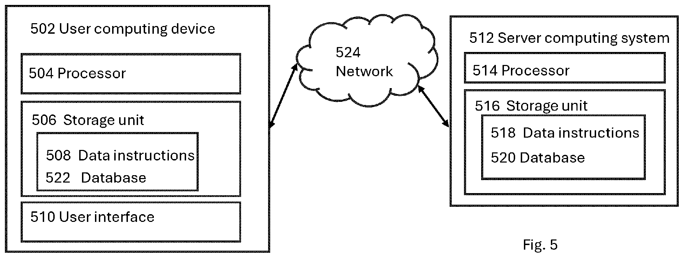

In Fig. 5 a system according to a second embodiment of the present disclosure is shown. The system 500 includes a user computing device 502 and a server computing system 512 which are communicatively coupled over a network 524. The user computing device 502 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 502 includes one or more processors 504 and a storage unit 506. The one or more processors 504 may be any suitable processing device (e.g., a processor core, a microprocessor, an ASIC, a FPGA, a controller, a microcontroller, etc.) and can be one processor or a plurality of processors that are operatively connected. The storage unit 506 may include one or more non-transitory computer-readable storage mediums, such as RAM, ROM, EEPROM, EPROM, flash memory devices, etc., and combinations thereof. The storage unit 506 includes data instructions 508 which are executed by the processor 504 to cause the user computing device 502 to perform operations. In particular the data instructions may include one or more of the method steps 102 to 118 as described above. The storage unit may optionally include a database 522 configured to store one or more neural networks, a plurality of compression methods and a plurality of compression ratios related to such compression methods. The database may optionally store the calculated cost functions and the calculated loss functions for one or more neural networks. The database may optionally store the compression policy.

In a similar way, the server computing system 512 includes one or more processors 514 and a storage unit 516. The one or more processors 514 may be any suitable processing device (e.g., a processor core, a microprocessor, an ASIC, a FPGA, a controller, a microcontroller, etc.) and may be one processor or a plurality of processors that are operatively connected. The storage unit 516 may include one or more non-transitory computer-readable storage media, such as RAM, ROM, EEPROM, EPROM, flash memory devices, magnetic disks, etc., and combinations thereof. The storage unit 516 may store data instructions 518 which are executed by the processor to cause the server computing system to perform operations, for example the operations described in one or more of the steps 102 to 118 of the present disclosure. The server computing system may include a database 520.

The user computing device 502 may also include one or more user interface 510 that receives user input. The user interface 510 allows a user to communicate with the network 524 and with the server computing system 512. The user interface may be connected to one or more devices for enabling communication with a user. For example, user interface 510 may be enabled for coupling to a display, a mouse, a keyboard, or other input/output device. User interface 510 may be used by a user for sending a request to the server computing system 512 and/or for selecting a neural network and/or one or more of the pluralities of compression methods and of the pluralities of compression ratios related to such compression methods from the database 522.

In one embodiment, the one or more neural networks, a plurality of compression methods and a plurality of compression ratios related to such compression methods may be sent to the user computing device 502 by the server computing system 512 over the network 524 upon a request of a user, performed through the user interface 510. The data sent by the server computing system are then used by the data instructions 508 and the processor 504 for calculating the loss functions, the cost functions and the compression policy. In this embodiment the compression policy is calculated locally in the user computing device.

In one embodiment, the compression policy may be calculated in the server computing system 512. In this embodiment the one or more neural networks, a plurality of compression methods and a plurality of compression ratios related to such compression methods to the server may be stored in the database 520 or may be sent by the user computing device 502 over the network. The data instructions 518, which include the steps 108 to 116 of the present method, will be then executed by the processor 514 for calculating the loss functions, the cost functions and the compression policy. In this embodiment the compression policy is calculated on the server computing system, i.e. externally to the user computing device.

From reading the present disclosure, other variations and modifications will be apparent to the skilled person. Such variations and modifications may involve equivalent and other features which are already known in the art of semiconductor device processing, and which may be used instead of, or in addition to, features already described herein.

Although the appended claims are directed to particular combinations of features, it should be understood that the scope of the disclosure of the present specification also includes any novel feature or any novel combination of features disclosed herein either explicitly or implicitly or any generalization thereof, whether or not it relates to the same specification as presently claimed in any claim and whether or not it mitigates any or all of the same technical problems as does the present specification

The present disclosure refers to elements or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness, it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims. Furthermore, the word "may" is used in a permissive sense (i.e., meaning having the potential to), rather than the mandatory sense (i.e., meaning must). Similarly, the words "include," "including," and "includes" mean including, but not limited to. Unless stated otherwise, terms such as "first" and "second" are used to arbitrarily distinguish between the elements such terms describe. Thus, these terms are not necessarily intended to indicate temporal or other prioritization of such elements.

## Claims

1. A method for using a compression policy of a neural network, the method comprising the steps of:
selecting the neural network, wherein the neural network comprises a plurality of layers;
selecting a plurality of compression methods, a plurality of compression ratios associated with the plurality of compression methods, and a target global compression ratio for the neural network;
compressing each of the plurality of layers of the neural network according to each combination of the plurality of compression methods and of the plurality of compression ratios;
for each of the plurality of layers, calculating a value for a loss function and a value for a cost function;
calculating the compression policy for the target global compression ratio using the value for the loss function and the value for the cost function for each of the plurality of layers, and
compressing the neural network according to the compression policy.

2. The method according to claim 1 further comprising the step of inferring, for each of the plurality of layers of the neural network, the combinations minimizing the loss function and the cost function and using said combinations for calculating the compression policy.

3. The method according to any preceding claim wherein the plurality of compression methods, the plurality of compression ratios associated with the plurality of compression methods, and the target global compression ratio for the neural network are stored in a database.

4. The method according to any preceding claim wherein the value of the loss function and the value of the cost function are stored in a database.

5. The method according to any preceding claim wherein the step of calculating the compression policy for the target global compression ratio using the loss function and the cost function is executed using a solver for a constrained optimization problem.

6. The method according to any preceding claim further comprising the step of storing the compression policy in a database.

7. The method according to any preceding claim wherein the plurality of compression methods comprises one or more of: quantization methods, pruning methods, weight sharing methods, tensor decomposition methods or low-rank matrix factorization methods.

8. The method according to any preceding claim wherein a further fine-tuning step is applied on each compressed layer of the plurality of layers of the neural network.

9. The method according to claim 1 to claim 7 wherein a further fine-tuning step is applied on the compressed neural network.

10. A computing system, comprising:
one or more processors; and
one or more storage units that stores data instructions that, when executed by the one or more processors, cause the computing system to:
select a neural network, wherein the neural network comprises a plurality of layers;
select a plurality of compression methods, a plurality of compression ratios associated with the compression methods, and a target global compression ratio for the neural network;
compress each of the plurality of layers of the neural network according to each combination of the plurality of compression methods and of the plurality of compression ratios;
for each of the plurality of layers, calculate a value for a loss function and a value for a cost function;
calculate a compression policy for the target global compression ratio using the value for the loss function and the value for the cost function for each of the plurality of layers; and
compress the neural network according to the compression policy.

11. The computing system according to claim 10 wherein the step of selecting the neural network, and/or the plurality of compression methods, and/or the plurality of compression ratios associated with the compression methods, and/or the target global compression ratio for the neural network is performed via a user interface.

12. The computing system according to claim 10 or claim **11** further comprising a database.

13. The computing system according to claim 12 wherein the database is configured to store: one or more neural networks, and/or the plurality of compression methods, and/or the plurality of compression ratios associated with the compression methods, and/or the target global compression ratio for the neural network and/or the value of the loss function for each layer of the neural network and/or the value of the cost function for each of the plurality of layers of the neural network.

14. The computing system according to claim 12 or claim 13 wherein the database is stored in a user computing device.

15. The computing system according to claim 12 or claim 13 wherein the database is stored on a server computing system.
